# EUROPEAN PATENT APPLICATION

(11) **EP 1 132 034 A1**
(43) Date of publication of application: **12.09.2001**
(21) Application number: 01200835.5
(22) Date of filing: 05.03.2001
(51) Int. Cl.: A47J 47/00

(54) **Improved work shelf for processing and/or cutting food products**

(30) Priority: 07.03.2000 IT MI200437
(71) Applicant: Artigiana Coltellerie SNC di Ferraro Antonio & C., 20132 Milano (IT)
(72) Inventor: Narducci, Michele, 20043 Arcore (IT); Ferraro, Antonio, 20100 Milano (IT); Ferrari, Wladimiro, 20132 Milano (IT)
(74) Representative: Bottero, Claudio

(57) **Abstract**

A work shelf (1, 101) for processing and/or cutting food products is described, comprising a support surface (6) for processing and/or cutting food products, defined by the upper face of a slab (5) removably associated to the shelf. The work shelf (1, 101) may be in the form of a chopping board and, as such, the work shelf may be removably associable to a support surface (2, 18) of a piece of furniture for processing, cutting or displaying food products, or may be an integral part of the support surface (2, 18) of the same piece of furniture. Advantageously, the work shelf (1, 101) of the invention enables to maintain the support surface (6) for processing and/or cutting food products in the desired conditions adapted to guarantee the safety and healthiness of the latter from the hygienic point of view at a reduced cost with respect to what is currently made possible by the work shelves of the prior art.

## Description

### Field of the invention

The present invention relates to a work shelf for processing and/or cutting food products in general (meat, fish, cheese, vegetables, pork salted meat and salami in general) of the type comprising a support surface on which the above products are processed and/or cut.

The invention also relates to a piece of furniture for processing, cutting or displaying food products such as for example a chopping block, a work table or a display stand, comprising the above work shelf.

### Prior art

As is known, in the field of treatment, preparation and packaging before sale of food products such as for example meat, fish, cheese, vegetables, pork salted meat and salami in general, and the like, the need is particularly felt of ensuring that the various processing operations of the food products subsequent to the primary production and including, among other things, the preparation, processing (including butchery in the case of meat), manufacture, packaging, handling and sale or supply of such products are carried out in such a way as to guarantee the safety and healthiness of the latter. In other words, and according to what is required by the regulations issued in the field (see Decrees no. 155 of May 26th, 1997, no. 156 and successive amendments), in the treatment, preparation and packaging before sale of food products it is necessary to ensure that the latter are suitable for human consumption from the hygienic point of view.

In particular, in the case of preparation and packaging of food products before sale it is thus necessary to ensure that the support surface on which the various processing operations and, above all, the cutting of the food products are carried out, is suitably clean, free from residues from the previous preparation and cutting operations and disinfected, if necessary, so as to minimise and - if possible - prevent any possible contamination of the food products by the support surface or, accidentally, by other food products previously processed on such surface (cross contamination).

To this end, the support surface of the work shelves on which the above operations are carried out - which nowadays are generally made of a suitable plastics material compatible with food - is subjected to daily and accurate cleaning and/or disinfection by using water, detergents and/or disinfectants and, if necessary, mechanical means such as for example mops or brushes for removing the food residues.

However, such cleaning operations become - with time - increasingly difficult to carry out with carefulness due to the wear of the support surface of the work shelf, which gradually loses its planarity due the unavoidable scratches, notches and incisions produced by the tools used for processing and cutting the food. The surface roughness thus formed not only increasingly hinders the cleaning operations, but also unavoidably becomes a receptacle of stinking residues and of germs and bacteria to the detriment of those conditions of hygiene, safety and healthiness which must be ensured.

In order to overcome this drawback and according to the constant teaching of the prior art of the field, a mechanical operation adapted to remove a surface layer of the work shelf is carried out at more or less frequent deadlines as a function of the wear degree of the support surface of the food products, so as to create a new support surface for the food products perfectly planar and free from any roughness.

However, this mechanical operation - generally carried out by planing - is particularly cumbersome from the technical point of view and expensive from the economical point of view, since the support surface of the food products mainly consists of the upper surface (or, in some cases, of some portions) of a support surface which is an integral part of a table or of display stand, and which often has considerable size and weight.

Since the planing operations cannot be directly carried out on the work shelf of the table or of the display stand, these operations necessarily imply the disassembly of such shelf, the removal of the upper layer of the work shelf by means of suitable tools, and then the reassembly thereof on the table or on the display stand.

The costs for restoring the support surface of the work shelf, which are considerable *per se* due to the amount of specialised labour involved, are moreover additionally increased both by the need of storing spare work shelves so as to prevent undesired stops in the processing or in the sale of the food products, and by the need of periodically replacing the work shelves on which the above-mentioned mechanical restoration operations of the support surface may no longer be carried out when the shelf wears below a certain thickness limit.

Finally, such expensive replacement of the work shelves becomes necessary also when the planing cannot be carried out on site due to the lack of suitable areas and when the planing is not advantageous anymore from the economical point of view whenever the related costs exceed the value of the work shelves.

### Summary of the invention

The technical problem underlying the invention is thus that of overcoming these drawbacks by providing a work shelf for processing and/or cutting food products which may be maintained in such hygienic conditions as to ensure the safety and the healthiness of such products by means of operations which are less cumbersome and which have a definitely lower cost with respect to what is made possible by the cited prior art.

According to a first aspect thereof, the invention therefore provides - as a solution to the above technical problem - a work shelf of the type indicated above, which is characterised in that it further comprises at least one extractable slab removably associated to said shelf and defining said support surface.

According to the invention and thanks to the fact that the support surface for processing and/or cutting the food products is constituted by the upper surface of a slab removably associable to the same shelf, it is advantageously possible to completely prevent the planing operations of the shelf, which are replaced by the simple replacement of the above-mentioned slab at predetermined time intervals.

Advantageously, moreover, the slab of the invention may be easily removed from the work shelf at the end of the food products processing and/or cutting operations, and may be also easily washed and, if needed, accurately disinfected for example by immersion into a suitable cleaning and/or disinfecting solution.

Advantageously, the invention also enables to additionally reduce the costs related to the maintenance of the desired hygiene conditions of the processing and/or cutting operations of the food products without the need of having to keep on stock spare work shelves or of having to periodically replace the entire work shelf when the latter wears below a certain thickness limit.

The wear of the support surface of the food products, in fact, is limited to a so-called "spare" portion of the shelf, that is the extractable slab, which has - as such - a low cost and which may be easily replaced directly by the personnel of the sale points without the assistance of specialised labour.

In a preferred embodiment of the invention, the work shelf may be in the form of a chopping board removably associable to a support surface of a pre-existing and entirely conventional piece of furniture adapted to process, cut or display food products such as, for example, a chopping block, a work table or a display stand.

In this way, it is advantageously possible not only to have a shelf which may be easily moved and arranged at any point on a wider surface on which the food products processing and/or cutting operations are carried out, but also to impart the above-mentioned advantageous features to pre-existing and entirely conventional supporting elements (chopping block, work table or display stand) without necessarily having to replace the same.

In this preferred embodiment and in order to firmly associate the work shelf to the support surface of the pre-existing piece of furniture, the work shelf of the invention may be advantageously provided with suitable means co-operating with the above support surface so as to hold the shelf on the support surface.

Conveniently, such means may consist of an abutment projecting in a cantilevered fashion from a lower side of the shelf and in abutting relationship with an end edge of the above support surface, or of a tenon and mortise joint consisting of a tenon projecting from the lower side of the shelf, and of a mortise arranged on the upper surface of the above support surface or vice versa, or of screws and nuts or of any other suitable fastening means enabling the connection - preferably in a removable manner - of the work shelf to the support surface of the pre-existing piece of furniture.

In a further preferred embodiment of the invention, the work shelf may be an integral part of the support surface of a piece of furniture for processing, cutting or displaying food products, such as for example a chopping block, a work table or a display stand.

In this case, the work shelf may be essentially constituted by at least one portion of such support surface, or may substantially coincide with the latter whenever the extractable slab has a width and length substantially equal to those of the support surface of the piece of furniture.

The invention thus provides - as solution to the technical problem described above - also a piece of furniture for processing and/or cutting and optionally displaying food products, which is characterised in that it comprises at least one shelf of the type described above.

As said above, the piece of furniture of the invention may be in the form of a chopping block, a work table or a display stand, and has the same advantages illustrated above with reference to the work shelf, with the further advantageous feature of having one or more extractable slabs directly incorporated in the structure of its own support surface.

It goes without saying that thanks to the above structural features, such a piece of furniture enables to save labour and costs for ensuring that the support surface, on which the various food products processing and cutting operations are performed, is always maintained in suitable conditions of hygiene, safety and healthiness.

Finally, in all the embodiments of the invention the extractable slab may be sized in a suitable manner so as to have a support surface with the size necessary and sufficient to allow an easy performance of the various processing operations required without interesting the remaining portions of the piece of furniture on which the shelf is laid or in which the work shelf is incorporated, portions which therefore remain hygienically intact and not polluted by possible residues of food products.

### Brief description of the drawings

Additional features and advantages of the present invention will become more clearly apparent from the following detailed description of some preferred embodiments of a shelf and of a piece of furniture for processing and/or cutting and optionally displaying food products according to the invention, made hereinafter by way of a non-limiting illustration with reference to the attached drawings. In the drawings:
- Figure 1 is a perspective view of a first embodiment of a work shelf according to the invention, in the form of a chopping board removably associable to the support surface of a piece of furniture for processing and/or cutting and optionally displaying food products;
- Figure 2 is a perspective view of a display stand for processing and/or cutting and optionally displaying food products including a second embodiment of a work shelf according to the invention;
- Figure 3 is a perspective view of a further embodiment of the display stand of figure 2;
- Figures 4 - 6 are perspective views of some details of as many alternative embodiments of the work shelf according to the invention.

### Detailed description of the preferred embodiments

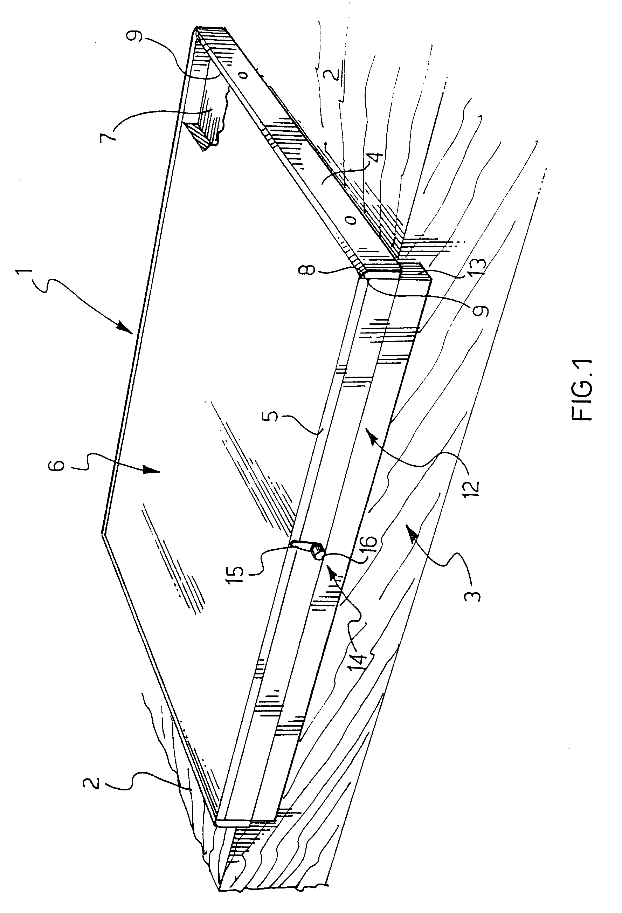

With reference to figure 1, a first embodiment of a work shelf for processing and/or cutting food products according to the invention is generally indicated at 1.

In this embodiment, the work shelf 1 is essentially constituted by a chopping board removably associable to a support surface 2 of a pre-existing and entirely conventional piece of furniture 3, in this case a work table, adapted to process and cut food products.

The chopping board 1 is essentially constituted by a support frame 4, made of a suitable structural material such as, for example, plastics, wood or the like, to which an extractable slab 5 is removably associated, the upper face of which defines a support surface 6 for processing and/or cutting food products.

Preferably, the extractable slab 5 is made of a suitable material compatible with foodstuff which, if kept in a good condition and subjected to regular maintenance, is adapted to minimise the risks of contamination of the same food products. More preferably, the extractable slab 5 is made of a suitable plastics material, such as for example polyethylene.

Preferably, the extractable slab 5 has a thickness comprised between 5 and 10 mm, adapted to ensure that the incisions and notches caused by the cutting tools do not reach the frame 4 below.

In a preferred embodiment, moreover, the extractable slab 5 is provided with a colour or mark adapted to identify the type of food products to be processed and/or cut on the support surface 6.

Advantageously, the extractable slab 5 is housed with mating engagement in a respective mating seat 7 formed in the upper portion of the frame 4 so as to be easily inserted into and extracted from the same.

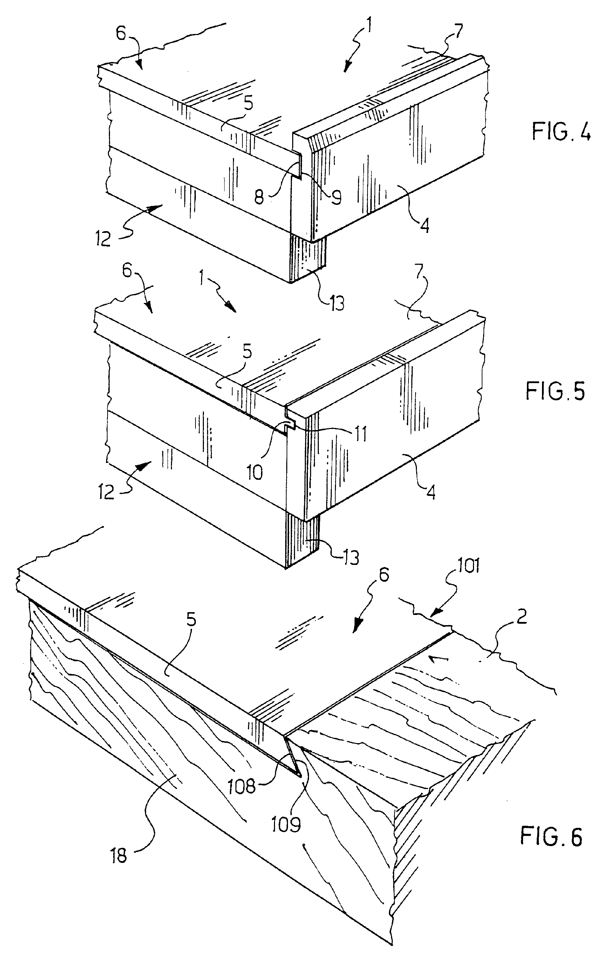

In an alternative embodiment of the chopping board 1, illustrated in figures 4 and 5, the extractable slab 5 is slidingly mounted as a drawer in the respective housing seat 7 formed in the frame 4. In this case, it is advantageously possible not only to facilitate the insertion and extraction operations of the slab 5 into and from the frame 4, but also to prevent accidental movements of the slab 5 along a vertical direction and away from its seat 7.

In the embodiment shown in figure 4, the extractable slab 5 is slidingly mounted as a drawer in its housing seat 7 by engagement of opposite lateral side edges 8 of the slab (only one of which is visible in figure 4) in corresponding mating guiding and sliding seats 9 formed at opposite lateral sides of the seat 7.

In the embodiment shown in figure 5, the extractable slab 5 is slidingly mounted as a drawer in its housing seat 7 by engagement of opposite ribs 10 (only one of which is visible in figure 5) extending from the lateral side edges 8, in corresponding guiding and sliding grooves 11 formed at opposite lateral sides of the seat 7.

In order to firmly hold the chopping board 1 on the support surface 2 of the work table 3, the support frame 4 of the chopping board 1 is provided, in the lower side thereof, with suitable means 12 co-operating with the support surface 2 for holding the chopping board thereon.

In this embodiment, the means 12 are essentially constituted by a substantially parallelepipedal abutment 13, extending in a cantilevered fashion from a lower face of the frame 4 of the chopping board 1 and in abutting relationship with an end edge of the support surface 2 of the work table 3.

Advantageously, finally, the frame 4 of the chopping board 1 is preferably provided with stop means 14 for holding the extractable slab 5 in its mating seat 7.

In the embodiment shown, the stop means 14 consists of a pawl 15 pivoted to the frame 4 and angularly movable by means of a control handle 16 between a first position, in which the pawl co-operates with a free edge of the slab 5 for holding the slab in the seat 7, and a second position away from said edge, in which the pawl allows the extraction of the slab from the frame 4.

During use, the chopping board 1 described above enables to perform the desired operations of processing and/or cutting of the food products on the support surface 6 of the slab 5 and, at the end of the day, to easily and accurately carry out the daily cleaning and/or disinfecting operations on the surface 6, by removing the slab 5 from its housing seat 7.

When the support surface 6 of the slab 5 shows such cuts and incisions which do not allow anymore to easily carry out the processing and/or cutting operations of the food products and/or to carry out the careful cleaning and optional disinfection operations required, the slab 5 is discarded and replaced by a new slab without having to replace the whole chopping board 1.

Thanks to the ease of replacement of the slab 5 and to the low cost of the material used (preferably plastics), the chopping board 1 of the invention may thus be maintained in the required conditions of hygiene, safety and healthiness without the need of carrying out cumbersome operations and at a definitely lower cost with respect to what is made possible by the work shelves of the prior art.

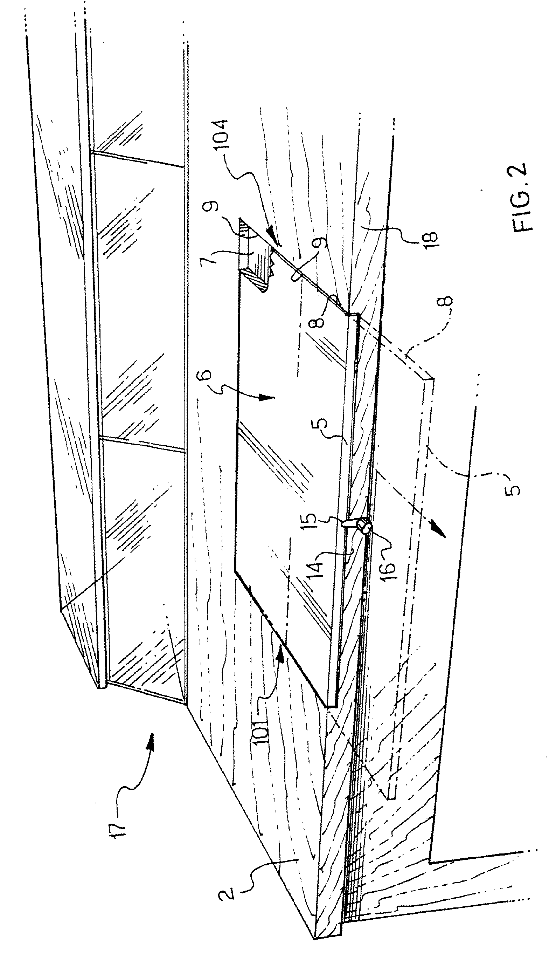

With reference to figures 2, 3 and 6, an alternative embodiment of the work shelf according to the invention shall be now described.

In the following description and in such figures, the elements of the work shelf which are structurally or functionally equivalent to those illustrated above with reference to figures 1, 4 and 5 will be indicated with the same reference numbers, and will not be further described.

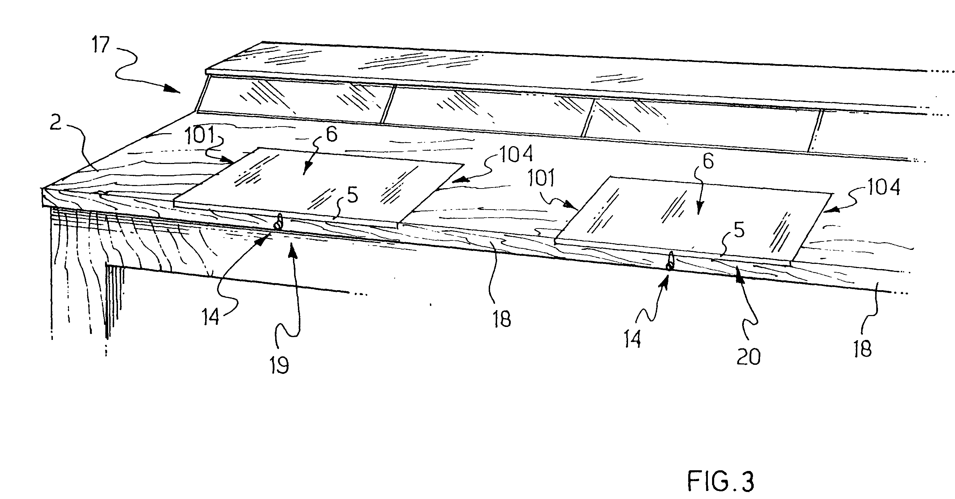

In the embodiment shown in figures 2 and 3, the work shelf - indicated at 101 - is an integral part of the support surface 18 of a piece of furniture for processing, cutting or displaying food products, in the illustrated example constituted by a display stand 17.

In this case, therefore, the support frame 104 of the extractable slab 5 is essentially constituted by a portion of the aforementioned support surface 18, as illustrated in figures 2 and 3, or may substantially coincide with the entire support surface 18 if the slab 5 has a length and a width substantially equal to said support surface.

In this embodiment of the invention, the display stand 17 may provide the user with a plurality of workstations placed side by side for processing or cutting the food products, as it is illustrated for example in figure 3.

In this case it is therefore advantageously possible to have on the support surface 18, for example, a first workstation 19 for cutting and preparing pork salted meat and salami in general, a second workstation 20 for cutting and preparing cheese and so on, each workstation being provided with a separate support surface 6.

In this embodiment, it is thus advantageously possible to accomplish the replacement of the slabs 5 of each work shelf 101 at different moments as a function of the relative wear conditions which, as known, may be different according to the food products processed and cut on the support surface 6 of the slab 5.

Moreover, this'variant of the invention enables to minimise the risks of a cross contamination among food products, each being processed and/or cut in the respective workstation.

In this case, moreover, it is preferable and advantageous to manufacture the various slabs 5 of the different work shelves 101 with materials having different colours, so as to prevent undesired accidental exchanges of the different slabs 5 with one another and to further reduce the risk of the aforementioned cross contamination among food products.

Also in this embodiment of the invention, in which the work shelf 101 is an integral part of or coincides with the support surface 18 of a piece of furniture 17, the extractable slab 5 is preferably slidingly mounted as a drawer in its housing seat 7 formed in the frame 104.

This coupling of the slab 5 with its housing seat 7 may be accomplished either in a manner analogous to that described with reference to the chopping board 1 or by suitably flaring the lateral side edges 8 of the slab 5 as illustrated in figure 6.

In this case, the inner walls of the seat 7 have a groove 109 having a shape mating the edges 8, thus forming a seat for slidingly guiding the slab 5 when the latter is inserted into or extracted from the frame 104.

Similarly to what has been described above with reference to the chopping board 1, also the display stand 17 and the work shelf 101 incorporated therein enable to save labour and costs for ensuring that the support surface 6 of the slab 5 of the work shelf(s) 101, on which surface processing of the food products is carried out, is always maintained in the required conditions of hygiene, safety and healthiness.

Clearly, a man skilled in the art may introduce changes and variants to the invention described hereinabove in order to satisfy specific and contingent application requirements, variants and changes which anyhow fall within the scope of protection as defined by the following claims.

## Claims

1. Work shelf (1, 101) for processing and/or cutting food products, comprising a support surface (6) for processing and/or cutting food products, **characterised in that** it further comprises at least one extractable slab (5) removably associated to said shelf (1, 101) and defining said support surface (6).

2. Work shelf (1, 101) according to claim 1, wherein said extractable slab (5) is housed with mating engagement in a respective mating seat (7) formed in the upper portion of said shelf (1, 101).

3. Work shelf (1, 101) according to claim 2, wherein said extractable slab (5) is slidingly mounted as a drawer in said mating seat (7) by engaging opposite lateral side edges (8) of the slab (5) in corresponding guiding and sliding mating seats (9, 109) formed at opposite lateral sides of said seat (7).

4. Work shelf (1, 101) according to claim 3, wherein said extractable slab (5) is slidingly mounted in said mating seat (7) by engaging opposite ribs (10) extending from said lateral side edges (8) into corresponding guiding and sliding grooves (11) formed at opposite lateral sides of said seat (7).

5. Work shelf (1, 101) according to any one of the preceding claims, further comprising stop means (14) for holding the slab (5) in said mating seat (7).

6. Work shelf (1, 101) according to any one of the preceding claims, in the form of a chopping board removably associable to a support surface (2, 18) of a piece of furniture (3, 17) for processing, cutting or displaying food products.

7. Work shelf (1, 101) according to claim 6, further comprising means (12) co-operating with said support surface (2, 18) for holding said work shelf (1, 101) on the support surface.

8. Work shelf (1, 101) according to any one of claims 1-5, **characterised in that** it is essentially constituted by at least one portion of a support surface (2, 18) of a piece of furniture for processing, cutting or displaying food products.

9. Work shelf (1, 101) according to any one of the preceding claims, wherein said extractable slab (5) is made of a suitable material compatible with food products.

10. Work shelf (1, 101) according to any one of the preceding claims, wherein said extractable slab (5) has a thickness comprised between 5 and 10 mm.

11. Work shelf (1, 101) according to any one of the preceding claims, wherein said extractable slab (5) is provided with a colour or a mark adapted to identify the type of food product to be processed and/or cut on said support surface (6).

12. Piece of furniture for processing and/or cutting and optionally displaying food products, comprising at least one shelf according to any one of claims 1-11.

13. Piece of furniture according to claim 12, in the form of a chopping block, a work table (3) or a display stand (17).
